# EUROPEAN PATENT SPECIFICATION

(11) **EP 1 945 583 B1**
(45) Date of publication and mention of the grant of the patent: **19.09.2018**
(21) Application number: 06790370.8
(22) Date of filing: 12.10.2006
(51) Int. Cl.: C03B 37/02, C03B 37/012, B29C 47/12, B29C 47/00, B29L 31/60, B29D 11/00, B29C 47/54, B29K 33/00, B29B 11/10, B29B 11/14, C03B 37/022

(54) **METHOD AND DEVICE FOR FORMING MICROSTRUCTURED FIBRE**
VERFAHREN UND VORRICHTUNG ZUR BILDUNG VON MIKROSTRUKTURIERTER FASER
PROCÉDÉ ET DISPOSITIF POUR FORMER UNE FIBRE MICRO-STRUCTURÉE

(30) Priority: 12.10.2005 AU 2005905620; 12.10.2005 AU 2005905619
(43) Date of publication of application: 23.07.2008
(73) Proprietor: Adelaide Research & Innovation Pty Ltd., Adelaide, S.A. 5000 (AU)
(72) Inventor: MONRO, Tanya, Adelaide, S.A. 5000 (AU); EBENDORFF-HEIDEPRIEM, Heike, Adelaide, S.A. 5000 (AU); DAVIES, Philip T., Edinburgh, S.A. 5111 (AU)
(74) Representative: Gill Jennings & Every LLP
(86) International application number: PCT/AU2006/001500
(87) International publication number: WO 2007/041791

(56) References cited:
- EP-A2- 0 945 479
- EP-A2- 1 039 201
- EP-A2- 1 039 201
- EP-A2- 1 481 779
- WO-A1-02/059672
- WO-A1-02/095460
- WO-A2-02/101422
- WO-A2-02/101422
- GB-A- 2 386 434
- GB-A- 2 386 434
- US-A1- 2005 025 965
- US-A1- 2005 056 952
- PATENT ABSTRACTS OF JAPAN & JP 06 051 141 A (MITSUBISHI RAYON CO. LTD.) 25 February 1994
- PATENT ABSTRACTS OF JAPAN & JP 04 069 605 A (MITSUBISHI RAYON CO LTD.) 04 March 1992

## Description

### FIELD OF THE INVENTION

The present invention relates to a die and a method of using said die for the fabrication of optical fibres and in particular of microstructured optical fibre having a complex transverse structure.

### BACKGROUND OF THE INVENTION

Fibres having complex transverse structure in the form of a plurality of air channels extending longitudinally along the fibre, which are known in the art as microstructured optical fibres, have a number of desirable qualities when compared to conventional doped fibre implementations. They offer a number of unique optical properties and design flexibility that cannot be achieved with conventional fibres. Some of these properties include the ability to have light guidance in an air core via the photonic bandgap effect, broadband single mode guidance, anomalous dispersion down to 560 nm, large normal dispersion at 1550 nm and high form birefringence. In addition, by scaling the size of the features in the fibre profile, microstructured fibres can have mode areas and thus effective nonlinearity ranging over three orders of magnitude.

Typically, microstructured fibres exhibiting this complex transverse microstructure have been formed by first constructing or fabricating a preform having macroscopic transverse features of dimensions in the order of millimetres. This preform is then subsequently drawn into a fibre on a drawing tower in one or several steps, thereby resulting in micron or submicron features in the resultant fibre. Construction or fabrication of the preform can be accomplished by a number of techniques. For preforms formed from silica or 'hard' glass, one technique involves stacking a number of circular cross sectioned capillaries and rods together inside a jacket in a hexagonal close packed configuration which is then drawn or 'caned' to form a cane which is then further drawn to form the fibre.

Clearly, this process requires a great deal of skill to arrange and stack the capillaries and rods, making this process extremely difficult to automate. Also this process is limited, to close packed transverse structures such as hexagonal or square formats which severely restricts the freedom of transverse arrangements that may be realised utilising this stacking method. Another disadvantage is that the large degree of handling required to stack the capillaries and rods can degrade their surfaces leading to significant losses in the resultant fibre. Additionally, this process does not lend itself to the use of 'soft' glasses which are being increasingly employed in applications due to their extended transmissive properties which reach into the infra-red and also their enhanced optical nonlinearity which can be two orders of magnitude higher than silica.

Whereas the stacking process described above first involves sourcing uniform tubes and rods having outer diameters in the range of 10 - 20 mm, which are then drawn down to the stacking elements (i.e. capillaries and rods) having outer diameters in the range 0.5 - 2.0 mm, these initial large scale uniform tubes and rods are not commercially available for the vast majority of soft glasses. Accordingly, elements must be produced individually which involves additional steps of glass melting and processing. Furthermore, soft glasses are usually melted in smaller quantities and thus the fabrication of large uniform tubes and rods is not a trivial exercise.

Another disadvantage in applying the stacking process to soft glasses is that the handling of the small-size stacking elements (capillaries and rods) is challenging for soft glass due to the higher fragility and their inherent scratchability when compared to silica. As uniform and highly regular stacks are desirable, long capillaries having uniform inner and outer diameter are crucial. However, the steep temperature-viscosity-curves and higher surface tensions of soft glasses make the fabrication of such capillaries having these uniform properties very difficult.

Another process used to fabricate preforms having a complex transverse microstructure is by the use of casting or moulding methods. These methods include glass casting, sol-gel casting, extrusion moulding of polymer melt and in-situ polymerisation of a monomeric material in a mould. These processes are generally based on either gravity or extrusion filling of a mould with a liquid and then solidifying this liquid such that it retains its moulded shape following removal the mould. In this process, the mould geometry will determine the preform structure.

In sol-gel casting methods this solidification stage involves gel formation by lowering the pH value of the sol introduced into the mould. For glass casting and polymer melts this solidification stage involves the cooling of the original liquid which results in solidification. In the case of in-situ polymerisation of a monomeric material, this solidification process involves the heating or curing of the monomeric material to facilitate the in-mould polymerisation process and subsequent cooling thereby resulting in a solid polymer result.

As with the stacking method discussed previously, the casting and moulding processes are also limited to a range of materials that are suitable for these processes such as glass melts having very low viscosity, those polymers suitable for polymer melts and sols containing colloidal particles such as silica. In addition, these processes require a large degree of manual intervention thereby making them difficult to automate. Another significant disadvantage of casting or moulding methods is that the preform is solidified within the mould which can result in surface contamination and enhanced surface roughness.

An attempt to address some of these problems and reduce the complexity of the process involved in fabricating a preform is to employ the forced flow of extrudable material such as a suitable polymer material or soft glass through an extrusion die into free-space to fabricate the preform. One such example is described in PCT Publication No. WO 03/078339 (also published as GB2386434 in the name of the University of Southhampton) entitled "Fabrication of Microstructured Optical Fibre" which discloses an extruder die for forming a preform for manufacture into an optical fibre comprising a central feed channel for receiving a material supply by pressure-induced fluid flow; flow diversion channels arranged to divert a first component of the material radially outwards into a welding chamber formed within the die; a core forming conduit arranged to receive a second component of the material from the central feed channel that has continued its onward flow; and a nozzle having an outer part in flow communication with the welding chamber and an inner part in flow communication with the core forming conduit, to respectively define an outer wall and core of the preform.

The extruder die described above is indicative of the extremely complex die geometries that are required to form a preform for a microstructured fibre which in this case has a relatively simple hole arrangement. The die geometry is arrived at by either employing empirical means, thereby requiring a large amount of testing and trialling of die designs, or by complicated modelling of the interaction between the extruded material and the die geometry in the extrusion process. Accordingly, for each transverse structure design there is a large associated effort in determining the related die geometry that results in the desired transverse structure in the final fibre product.

For example the extruder die 800 depicted in Figure 18 of WO 03/078339 is a three part arrangement comprising an inner die part 802 and an outer die part 804 which together defines a welding chamber 806 and a spider disc 805 having a plurality of holes and incorporating a mandrel 803. The extruder die 800 is used in combination with an extruder die assembly 140 similar to that depicted in Figure 11 (see page 26, lines 7 and 8 of WO 03/078339). The spider disc 805 is located between the inlet chamber (ie cavity region of sleeve 146) and the first axial chamber 826 which further flows into radial channels 832 and 834 and then into welding chamber 806, and the mandrel 803 is captured within the inner die part 802. Thus to summarise WO 03/078339 discloses the use of highly complex die arrangements where there is little correlation between the die geometry and the resulting extrudate structure. This makes it difficult to form complex transverse structures such as those which require directed axial and radial flows through complex die geometries.

WO 02/101422 (Samsung Electronics) is directed to a method for fabricating an optical fiber preform using an extrusion die. However a problem with the die arrangements of WO 02/101422 such as those depicted in Figures 1A and 2A, it that they require the extrudable material to be in molten or liquid form to flow through the single inlet thereby significantly limiting the ability to apply any force to the extrudable material. As such, the die of WO 02/101422 is limited to use with polymers having a high melt flow index (eg see Examples 1 and 2) or air. However there is a need to develop dies for forming fibre performs having complex transverse structures made from a wider range of appropriate materials such as lead silicate glass and other "soft" glass materials having desirable properties such as extended transmissive properties and enhanced optical nonlinearity.

WO 02/ 095460 (Redfern Polymer Optics Pty Ltd) generally discloses the concept of a microstructured fibre preform. However, there is no detailed description of extrusion dies or methods of forming a microstructured fibre preform using an extrusion process or die.

EP 1481779 [NGK Insulators Ltd) is directed to a forming JIG and a method for producing formed body using the same. The forming jig is for use with a fluid material that is introduced by material supply holes 2 that extend through what is termed a rectification plate 4 given the use of "wires" that "stretch from the material supply holes 2 to near the exit of the drawing die" (see Figure 1 and paragraphs [0037] and [0038]). The one detailed example referred to in EP 1481779 relates to a clay mixture that is extruded at a rate of 10 mm/sec and which is then dried [0073]. However in forming optical fibre preforms the source material may be provided in the form of a billet and the extrusion rates are of the order of 0.1 mm/min, equivalent to 1.6 x 10⁻³ mm/sec which is at least 3 orders of magnitude less than that contemplated in EP 1481779.

It is an object of the present invention to provide a method and device capable of extruding an optical fibre preform that simplifies the design and fabrication of the die geometry for a desired fibre preform structure.

It is a further object of the present invention to provide a method and device capable of extruding an optical fibre preform which will allow automation of the extrusion process.

### SUMMARY OF THE INVENTION

In a first aspect the present invention accordingly provides a die for extruding an extrudable material to form an extruded member, the die comprising:
an inlet chamber to receive source material in the form of a billet;
an extrudate forming chamber;
a barrier member located between the inlet chamber and the extrudate forming chamber, the barrier member comprising a plurality of feed channels extending through the barrier member to form a feed hole plate;
a passage forming member extending from the barrier member substantially in the direction of extrusion into the extrudate forming chamber, wherein the feed channels are arranged with respect to the passage forming member to allow the extrudable material to substantially flow about the passage forming member to form a corresponding passage in the extruded member.

By providing for homogenous flow through the barrier member via the plurality of channels and then about the passage forming member, any distortion introduced into the formation of the corresponding passage in the extruded member is substantially minimised. In addition, the arrangement of the feed channels with respect to the passage forming member ensures that the extrudable material is not required to substantially flow around edges or sharp bends which further minimises distortion of the corresponding passage in the extruded member. In this manner, the relationship between the passage forming member and the corresponding passage in the extruded member may be determined more readily when compared to prior art methods. Another important advantage of the present invention is that the geometry of the relationship of the passage forming member and the feed channels is inherently scalable.

Preferably, the die comprises a plurality of passage forming members extending from the barrier member substantially in the direction of extrusion and wherein the feed channels are arranged with respect to the plurality of passage forming members to allow the extrudable material to substantially flow about the passage forming members to form corresponding passages in the extruded member.

Preferably, at least one of the plurality of passage forming members comprise removable attachment means to removably attach the at least one passage forming member from the barrier means.

This provides an increased flexibility in designing the transverse structure of the extruded member as passage forming members may be added or removed from the die as required resulting in the adding or removal of corresponding structures in the extruded member.

Preferably, the passage forming members vary in size to form corresponding passages in the extruded member of varying size.

Preferably, the feed channels are of varying size to vary the amount of extrusion of said extrudable material.

Preferably, the feed channels and the passage forming members are arranged in a regular lattice.

Preferably, the feed hole plate is removable from the die.

Preferably, the extruded member is a microstructured fibre preform.

In a second aspect the present invention accordingly provides a method for extruding an extrudable material to form an extruded member, the method comprising the steps of:
heating a billet of material in an inlet chamber to a predetermined temperature to form extrudable material;
forcing the extrudable material from the inlet chamber through a plurality of feed channels extending through a barrier member into an extrudate forming chamber, the barrier member located between the inlet chamber and the extrudate forming chamber to form a feed hole plate, and the feed channels located about a passage forming member extending from the barrier member in the direction of extrusion into the extrudate forming chamber; and
forming a passage in the extruded member by allowing the extrudable material to flow about the passage forming member.

Preferably, the method further comprises:
attaching at least one removably attachable passage forming member to the barrier member.

### BRIEF DESCRIPTION OF THE DRAWINGS

Embodiment of the present invention will be discussed with reference to the accompanying drawings wherein:
FIGURE 1 is a side sectional view of a die for extruding an extrudable material according to a first embodiment of the present invention;
FIGURE 2 shows perspective views depicting the rear or inlet end of the die collar component and a front view of the sieve or feed hole plate component which together form the die illustrated in Figure 1.
FIGURE 3 is a rear perspective view of the die components illustrated in Figure 2 as assembled;
FIGURE 4a is an end view of the feed hole plate illustrated in Figure 3;
FIGURE 4b is an end view of a fibre preform extruded from the feed hole plate illustrated in Figure 4b;
FIGURE 5a is an end view of a feed hole plate incorporating 7 rings of pins according to a second embodiment of the present invention;
FIGURE 5b is an end view of a fibre preform extruded from the feed hole plate illustrated in Figure 5a;
FIGURE 6a is an end view of a feed hole plate incorporating 4 rings of pins and varying feed channel size according to a third embodiment of the present invention;
FIGURE 6b is an end view of a fibre preform extruded from the feed hole plate illustrated in Figure 6a;
FIGURE 7a is an end view of a feed hole plate incorporating multiple cores according to a fourth embodiment of the present invention;
FIGURE 7b is an end view of a fibre preform extruded from the feed hole plate illustrated in Figure 7a;
FIGURE 8 is an end view of a fibre preform having a central longitudinal portion supported by four equally space walls;
FIGURE 9 is a rear end view of a die for extruding the fibre preform having the geometry illustrated in Figure 8 according to a fifth embodiment of the present invention;
FIGURE 10 is a side sectional view of the die illustrated in Figure 9;
FIGURE 11 is a rear end view of a die for extruding the fibre preform having the geometry illustrated in Figure 8 according to a sixth embodiment of the present invention; and
FIGURE 12 is a side sectional view of the die illustrated in Figure 11.

In the following description, like reference characters designate like or corresponding parts throughout the several views of the drawings.

### DESCRIPTION

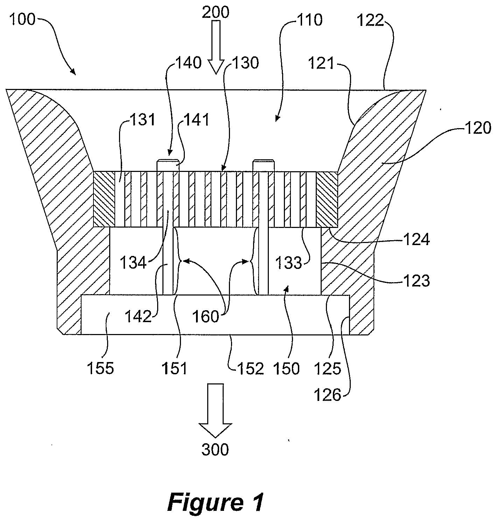

Referring now to Figure 1, there is shown a side sectional view of a die 100 for extruding an extrudable material in the direction indicated by arrow 200 to form an extruded member as indicated generally by arrow 300 according to a first embodiment of the present invention. In this first embodiment, die 100 is for the fabrication of an optical fibre preform from a billet of polymer such as polymethylmethacrylate or alternatively a soft glass material selected from one of the classes of fluoride, chalcogenide or heavy metal oxide glasses. Additionally, combination billets may also be formed by stacking two or more individual billets of the same or different composition. As would be apparent to those skilled in the art, the method and device described here may well be employed in a number of applications where an extruded member having a complex transverse structure is desired.

Die 100 is machined from chromium-nickel stainless steel grade 303 but equally other machineable materials with suitable corrosion and heat resistance properties may be used. In the case of extrusion of soft glass material, the inclusion of at least 8% nickel in the steel alloy used to form die 100 will function to prevent sticking of glass material to the die 100 in the extrusion process.

Die 100 includes a die nozzle or collar 120 and a feed hole or sieve plate 130 forming a barrier member between a die inlet chamber 110 and an extrudate forming chamber 150 having an internal wall 123 that terminates in end channel 155 whose diameter is defined by stepped ridge portion 125 thereby forming an end channel 155 whose internal wall 126 is of a greater diameter than extrudate forming chamber 150. End channel 155 allows for an extra degree of freedom in the vertical positioning of feed hold plate 130 within die 100 and therefore the length or height of the extrudate forming chamber 150 for a die collar 120 of fixed height. This is due to the fact that extruded member does not interact with the internal wall 126 of end channel 155 due to its larger diameter when compared to the extrudate forming chamber 150. In this manner, many different combinations of inlet chamber 110 and extrudate chamber 150 heights may be realised for a given die collar size 120 without having to change the extrusion chamber in which the billet and die 100 are mounted during the extrusion process.

The interface between end channel 155 and extrudate forming chamber 150 forms a plane defining the extrudate forming chamber outlet face 151. The terminating edge of end channel 155 also forms a plane defining the die outlet face 152. Die inlet chamber 110 includes circumferential tapered or fluted wall portions 121 which function to force the material to be extruded uniformly towards feed hole or sieve plate 130. Generally, the source material is in the form of a billet having a diameter similar to the diameter of the collar at the inlet plane 122 of the inlet chamber 110.

Feed hole plate 130 is supported by a circumferential stepped recess or shoulder 124 formed in the wall of die collar 120. In this first embodiment, feed hole or sieve plate 130 is forced against shoulder 124 during the extrusion process and may be simply removed from die 120 by pressing feed hole plate 130 in the opposite direction to shoulder 124. Feed hole plate 130 includes a number of regularly spaced feed channels 131 extending through plate 130.

Extending from feed hole plate 130 into extrudate forming chamber 150 and generally in the direction of extrusion are a number of passage forming members 160 which function to form longitudinal passages in the extrudate as material is forced through feed channels 131 and exits feed hole plate outlet face 133 in the extrusion process. In this embodiment, each passage forming member 160 is formed from the exposed shaft portion 142 of pin 140 which further includes a head portion 141 and is located in a corresponding location hole 134 which extends through feed hole plate 130. Exposed shaft portion 142 extends from feed hole plate 130 in the direction of extrusion up to the extrudate forming chamber outlet face 151 ensuring that in this embodiment the resultant passages formed in the extrudate have substantially the same transverse size and shape as the exposed shaft portions 142 of pins 140.

Whilst in this first embodiment, pins 140 are mounted or attached directly to the feed hole plate 130 by insertion into corresponding location holes 134, equally other embodiments whereby passage forming members form part of a separate overlay member having corresponding apertures aligned with feed channels 131 are contemplated to be within the scope of the invention.

Pins 140 are press-fitted into location holes 134 and locate with feed hole plate 130 in the direction of extrusion by virtue of head portion 141. Thus pins 140 may be removed from feed hole plate 130, but as would be appreciated by those skilled in the art, pins 140 may also be integrally formed with feed hole plate 130. By providing for the disassembly of the feed hole plate 130 and individual pins 140, as well as the removal of feed hole plate 130 from die collar 120, each of these components may be cleaned and polished more readily, further improving the preform quality by reducing the roughness of the inner surfaces of the die and thus reducing the surface roughness of the resultant preform.

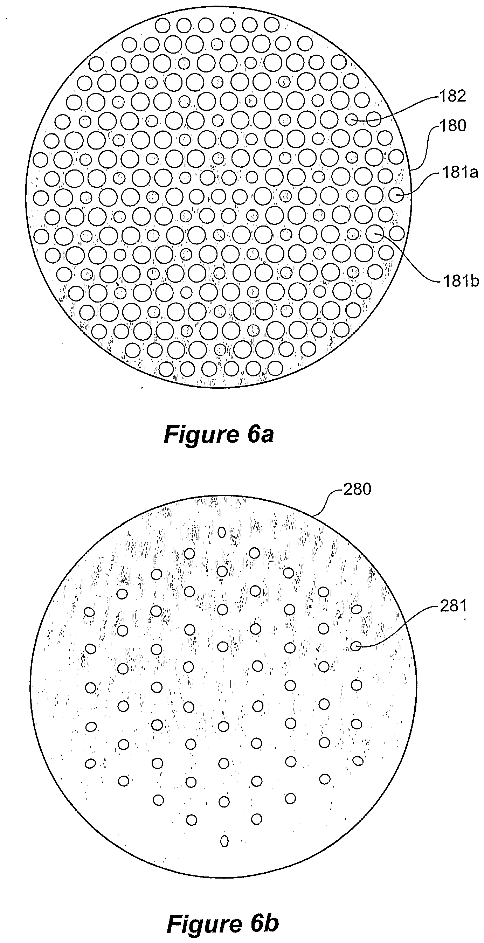

In this feed embodiment, feed channels 131 are all of the same diameter thereby channelling similar amounts of material in the extrusion process. However, these channel diameters may be varied to deliver material at different rates at different locations through feed hole plate 130 as required to allow even and homogeneous flow around the exposed shaft portion 142 of each pin 140 thereby minimising the distortion of the holes or passages in the extruded member (see for example Figures 6a and 6b). Additionally, whilst in this first embodiment feed channels 131 are circularly shaped and regular in cross section, equally they may be hexagonal or any other shape and also vary in cross section as required.

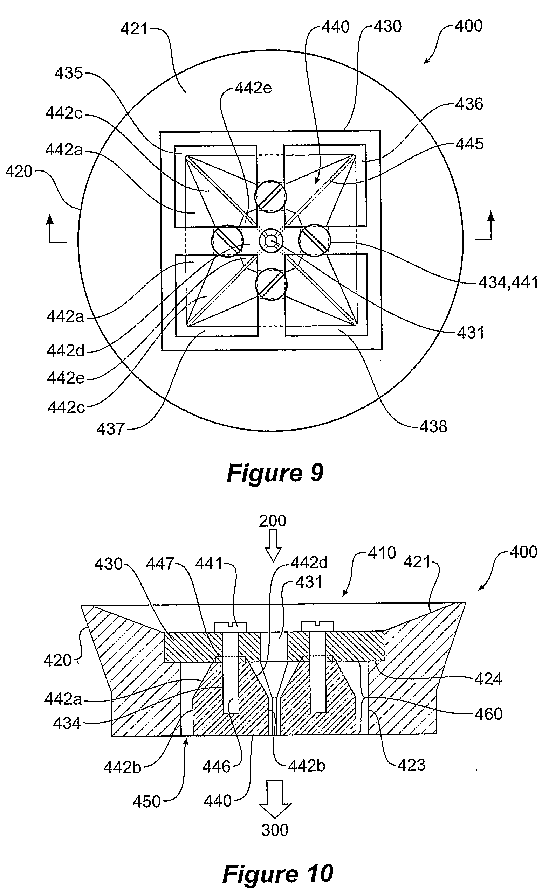

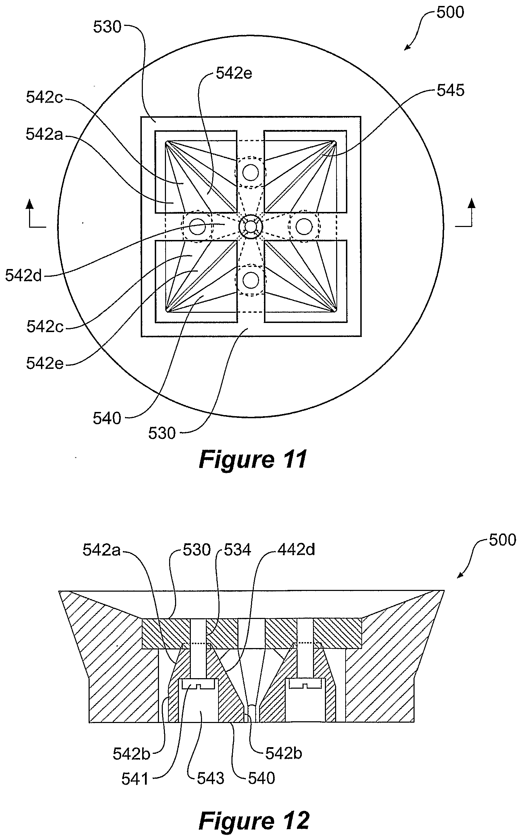

Similarly, the exposed shaft portions 142 of pins 140 or more generally passage forming members 160 may be of varying shape and size depending on the desired resultant transverse structure in the extruded member. In addition, the length of passage forming members 160 may be of varying length extending into extrudate forming chamber 150 implying that the free end of individual pins 140 may terminate either above or below extrudate forming chamber outlet face 151 as desired. Furthermore, individual passage forming members 160 may be tapered or more generally change shape or cross section as they extend into the extrudate forming chamber 150 (see for example Figures 10 and 12).

In the circumstances, where the orientation of pin 140 with respect to the location on feed hole plate 130 is important, then location grooves and corresponding registration ridges may be incorporated into the side walls of location holes 134 and pins 140 respectively. In another embodiment, location holes 134 and feed channels 131 are of equal diameter and essentially equivalent, thereby providing maximum freedom for location of the pins 140 on the feed hole plate 130 as pins 140 may be located within the lattice of feed channels 131 as desired.

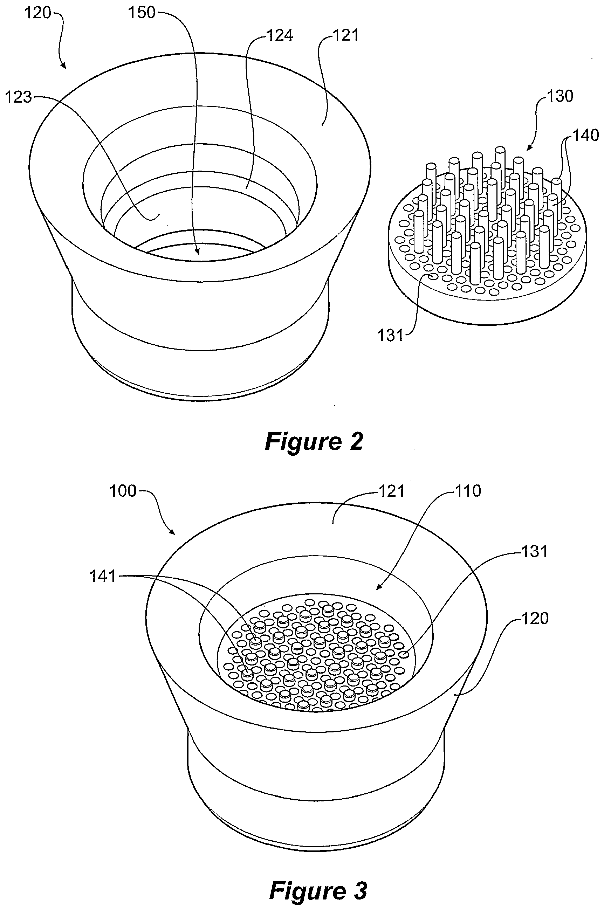

Referring now to Figures 2 and 3, there are shown a number of views of die 100 in the unassembled (see Figure 2) and assembled (see Figure 3) state. Whilst in this first embodiment, feed hole plate 130 is removable from collar 120, it would be apparent to those skilled in the art that these components may be formed integrally to provide a unitary die. The interspacing of feed channels 131 and pins 140 ensures that the extrudate flows uniformly about each pin 140 thereby forming the walls of the passages that make up the transverse structure of the preform.

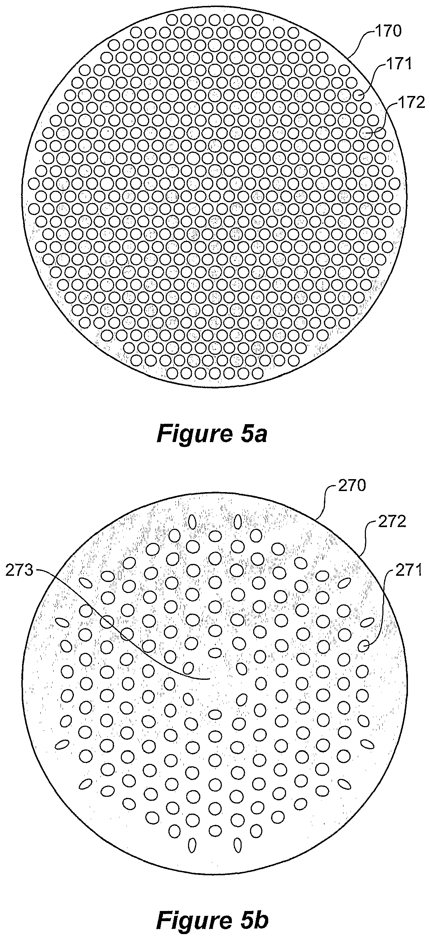

In this embodiment, die 100 incorporates a feed hole plate 130 having a diameter of 18.0 mm, extrudate forming chamber 150 of diameter 15.5 mm, feed channels 131 of diameter 0.8 mm and pins 140 of diameter 1 mm. The distance between each pin 140 is 2 mm and die 100 includes three rings of pins 140 resulting in a total of 36 pins forming a hexagonal lattice structure. An advantage of the present invention is that the die design is easily scalable, for example a feed hole plate 130 having a diameter of 36 mm diameter will allow almost seven rings of pins (i.e. 162 pins), which results in the fabrication of a 30 mm preform having 162 holes each of 1 mm diameter and with an inter-hole or pin spacing of 2 mm (see for example Figures 5a and 5b).

Of course other regular or non-regular lattice structures may be formed by suitable arrangement of pins 140 and feed channels 131 with respect to feed hole plate 130. Additionally, where a longitudinal passage corresponding to a cut-out portion is required in the extruded member, say for example to expose an inner region of the extruded member, a passage forming member or combination of passage forming members of appropriate sectional profile corresponding to the shape of the cut-out section may be located towards the edge of the feed hole plate 130.

For fabricating a polymer preform by extrusion using die 100, a billet of cross sectional diameter of 30 mm is introduced at a chamber temperature of 165°C and fixed ram speed of 0.1 mm/min. The force required to extrude the billet through die 100 at this chamber temperature and ram speed is approximately 4.5 kN corresponding to a resultant pressure on the billet in the region of 6 MPa. For fabricating a preform from lead silicate glass using die 100, the billet chamber temperature required is 520°C with an associated fixed ram speed of 0.1 mm/min. As such, the force required is approximately 25 kN corresponding to a pressure on the billet of 35 MPa.

The method for forming a preform having a complex transverse structure as described herein may be readily adapted to an extrusion machine which will automate what has hereto been in the prior art a delicate process requiring significant manual input and highly specialised background knowledge. Broadly the extrusion machine incorporates a receptacle for receiving a billet of material and heating means to heat the billet of material to form the extrudable material. The extrudable material is then forced by forcing means as is known in the art through the die which is located in a die receiving chamber which allows the die to be rapidly changed out as required. Finally the extruded member is then received in an output chamber where it is allowed to cool before collection. Clearly, this represents a significant advance over the prior art with the most important advantages of such an extrusion machine being the precise speed and force control via computer control.

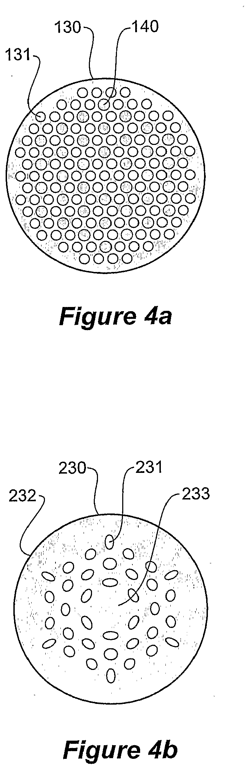

Referring now to Figures 4a and 4b there is shown an end view of the three ring pin feed hole plate 130 illustrated in Figures 2 and 3 and an end view of the corresponding fibre preform 230 extruded from feed hole plate 130. Fibre preform 230 includes an outer region 232 and an intermediate region consisting of a number of longitudinal channels or passages 231 which extend through the preform 230, these being formed by corresponding pins 140 located in feed hole plate 130 as has been described above thereby defining a core region 233.

Similarly in Figures 5a and 5b, corresponding views of a seven ring pin feed hole plate 170 and the corresponding fibre preform 270 are depicted in accordance with a third embodiment of the present invention. This clearly demonstrates the ability to scale the die design and hence the corresponding fibre preform as required. Once again longitudinal channels or passages 271 are formed within an outer region 272 and correspond to the location of pins 172 in feed hole plate 170 which again define a core region 273 in fibre preform 270. The distribution of feed channels 171 ensures that the extruded material flows uniformly about pins 172 to form the passages 271. In this case seven rings are employed as opposed to three as in the previous embodiment.

Figures 6a and 6b depict similar views of a four ring pin feed hole plate 180 and fibre preform 280 in accordance with a fourth embodiment of the present invention. In this embodiment, the feed channels are of two different sizes as compared to the feed channels 131, 171 of the three and seven ring designs respectively. In this manner, extruded material will flow more readily through the increased diameter feed channels 181b when compared to the smaller diameter feed channels 181a. In this application, this difference of flow rates has functioned to reduce the distortion and displacement of the longitudinal channels 281 in the fibre preform 280 as formed by pins 182 which may be an important consideration depending on the potential application for the resultant drawn fibre.

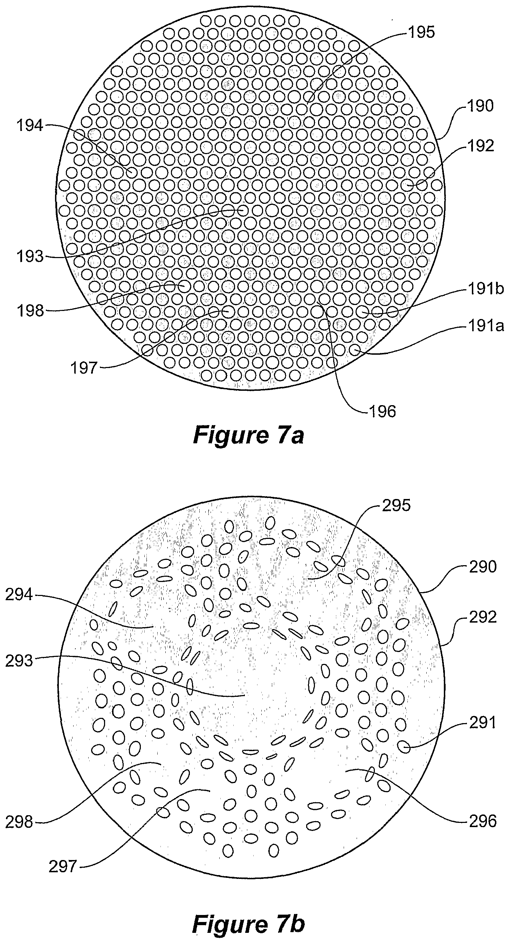

Referring now to Figures 7a and 7b, there is shown respective end views of a multi-core feed plate 190 and corresponding fibre preform 290 according to a fifth embodiment of the present invention. In this embodiment, five outer core regions 294, 295, 296, 297, 298 and in inner core region 293 are defined by the arrangement of longitudinal channels 291 which correspond directly to the arrangement of pins 192 which themselves defined corresponding core regions 193, 194, 195, 196, 197, 198 on feed hole plate 190. Once again varying size feed channels 191a, 191b have been employed to modify the flow of the extruded material to compensate for distortions introduced by the extrusion process. As would be appreciated by those skilled in the art, the range of preform designs depicted here clearly demonstrates the use with which the present invention may be adapted to provide extruded members having widely varying complex transverse geometries.

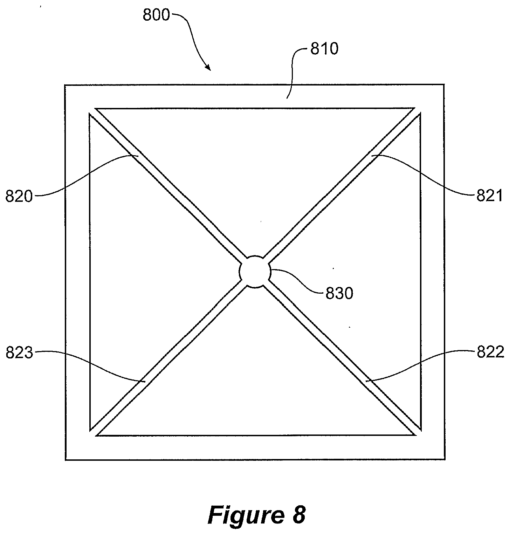

Referring now to Figure 8, there is shown an end view of a fibre preform 800 having an outer wall 810 and a central longitudinal portion 830 supported by four equally space walls 820, 821, 822, 823. This geometry has applications for the forming of nanowires which are described in detail in co-pending application entitled "Fabrication of Nanowires" claiming priority from Australian Provisional Patent Application No. 2005905619 filed on 12 October 2005, and assigned to the applicant of the present application, and whose contents are incorporated by reference in their entirety herein.

Referring now to Figures 9 and 10, there are shown rear and side section views of a die 400 for extruding the fibre preform 800 illustrated in Figure 8 according to a sixth illustrative embodiment of the present invention. In this sixth illustrative embodiment, the required transverse structure involves forming a central longitudinal portion 830 corresponding to feed channel 431 supported by four equally spaced walls, struts or web members 820, 821, 822, 823 corresponding to the spacing 445 between each of the four pins 440 being fed by material extruding through feed channels 435, 436, 437, 438 located in feed plate 430. Similar to die 100, die 400 includes a collar 420 having fluted or tapered walls 421 and a sieve or feed hole plate 430 that abuts shoulder 424 formed in the wall of collar 420 thereby forming a barrier member between die inlet chamber 410 and extrudate forming chamber 450.

Each pin 440 includes an inner tapered portion 442d, opposed side tapered portions 442c, opposed intermediate tapered portions 442e extending between the inner tapered portion 442d and the opposed side tapered portions 442c and an outer tapered portion 442a. The tapered portions 442a, 442b, 442c, 442d, 442e extend approximately half way down pin 440 and terminate in a vertical walled portion 442b that extends in the direction of extrusion into the extrudate forming chamber 450. The tapered portions 442a, 442b, 442c, 442d, 442e and parallel walled portion 442b act in combination as a passage forming member 460.

Tapered portions 442a, 442b, 442c, 442d, 442e function to guide the extruding material from feed channels 435, 436, 437, 438 to form walls, struts or web portions 820, 821, 822, 823 that support the central longitudinal portion 830 formed from material extruding from feed channel 431. The extrudate chamber walls 423 of collar 420 are arranged in a box or square configuration thereby forming the square profile of outer wall 810 of preform 800. Each pin 440 is attached to the feed plate by a top screw 441 located in location hole 434 which screws into a corresponding threaded aperture 446 extending into pin 440 from a top flattened section 447.

In terms of the dimensions of die 400, feed plate 430 has a length and width of 30 mm with the extrudate forming chamber 450 having a length and width of 26 mm. The arrangement and size of pins 440 results in wall, strut or web portions in the preform of an approximate length of 16 mm and a thickness of 0.5 mm respectively with a core diameter of 2 mm and an outer wall thickness of 1.5 mm.

Referring now to Figures 11 and 12 there are shown once again rear and side section views of a die 500 for extruding the fibre preform illustrated in Figure 8 according to a sixth illustrative embodiment of the present invention. In this sixth illustrative embodiment, the geometry of the pins 540 has been modified to further facilitate the flow of extruded material about the pins 540 by changing the degree and extent of tapered portions 542a, 542b, 542c, 542d, 542e with respect to vertical wall portions 542b for each pin 540. Additionally pins 540 are removably attached to feed hole plate 530 by screw 541 which is located in a lower recess 543 of pin 540 and screws upwardly into a threaded receiving aperture 534 located on feed hole plate 530. As would be appreciated by those skilled in the art, the present invention provides the capability to form new fibre preform designs which were not previously capable of being formed using prior art techniques.

Whilst the present invention is described in relation to fabricating a preform for an optical fibre it will be appreciated that the invention will have other applications consistent with the principles described in the specification.

A brief consideration of the above described embodiments will indicate that the invention provides an extremely simple, economical method and device for fabrication of optical fibre preforms that have a large number of transverse features in them, thereby satisfying the growing demand for optical fibres of this type motivated by the growing interest in soft glass photonic bandgap and large mode area fibres.

The nanowires and fibres produced from the preforms that are extruded according to various aspects of the present invention have many applications, including, but not limited to sensors for use in scientific, medical, military/ defence and commercial application; displays for electronic products such as computers, Personal Digital Assistants (PDAs), mobile telephones; image displays and sensors for cameras and camera phones; optical data storage; optical communications; optical data processing; traffic lights; engraving; and laser applications.

It will be understood that the term "comprise" and any of its derivatives (e.g. comprises, comprising) as used in this specification is to be taken to be inclusive of features to which it refers, and is not meant to exclude the presence of any additional features unless otherwise stated or implied.

## Claims

1. A die (100) for extruding an extrudable material to form an extruded member, the die comprising:
an inlet chamber (110) to receive source material in the form of a billet;
an extrudate forming chamber (150);
a barrier member located between the inlet chamber (110) and the extrudate forming chamber (150), the barrier member comprising a plurality of feed channels (131) extending through the barrier member to form a feed hole plate (130);
a passage forming member (160) extending from the barrier member in the direction of extrusion into the extrudate forming chamber (150), wherein the feed channels (131) are arranged with respect to the passage forming member 160) to allow the extrudable material to flow about the passage forming member (160) to form a corresponding passage in the extruded member.

2. The die (100) for extruding an extrudable material to form an extruded member as claimed in claim 1, wherein the die (100) comprises a plurality of passage forming members (160) extending from the barrier member substantially in the direction of extrusion (200, 300) and wherein the feed channels (131) are arranged with respect to the plurality of passage forming members (160) to allow the extrudable material to substantially flow about the passage forming members (160) to form corresponding passages in the extruded member.

3. The die (100) for extruding an extrudable material to form an extruded member as claimed in claim 2, wherein at least one of the plurality of passage forming members (160) comprise removable attachment means to removably attach the at least one passage forming member from the barrier means.

4. The die (100) for extruding an extrudable material to form an extruded member as claimed in claim 2 or 3, wherein the passage forming members (160) vary in size to form corresponding passages in the extruded member of varying size.

5. The die (100) for extruding an extrudable material to form an extruded member as claimed in any one of the preceding claims, wherein the feed channels (131) are of varying size to vary the amount of extrusion of said extrudable material.

6. The die (100) for extruding an extrudable material to form an extruded member as claimed in claim 2, wherein the feed channels (131) and the passage forming members (160) are arranged in a regular lattice.

7. The die (100) for extruding an extrudable material to form an extruded member as claimed in any one of claims 1 to 6, wherein the feed hole plate (130) is removable from the die.

8. The die (100) as claimed in any one of claims 1 to 7, wherein the extruded member is a microstructured fibre preform.

9. A method for extruding an extrudable material to form an extruded member, the method comprising the steps of:
heating a billet of material in an inlet chamber (110) to a predetermined temperature to form extrudable material;
forcing the extrudable material from the inlet chamber (110) through a plurality of feed channels (131) extending through a barrier member into an extrudate forming chamber (150), the barrier member located between the inlet chamber (110) and the extrudate forming chamber (150) to form a feed hole plate (130), and the feed channels (131) located about a passage forming member (160) extending from the barrier member in the direction of extrusion (200, 300) into the extrudate forming chamber; and
forming a passage in the extruded member by allowing the extrudable material to flow about the passage forming member.

10. The method for extruding an extrudable material as claimed in claim 9, wherein the barrier member comprises a plurality of passage forming members (166) extending substantially in the direction of extrusion (200, 300) and wherein the extrudable material is forced through the feed channels (131) to flow about the plurality of passage forming members (160) and form passages in the extruded member corresponding to the plurality of passage forming members (160).

11. The method for extruding an extrudable material as claimed in claim 10, wherein the passages in the extruded member are formed having different sizes by modifying corresponding passage forming members to have different size, shape or cross section.

12. The method for extruding an extrudable material as claimed in any one of claims 9 to 11, wherein the extrudable material is forced through the plurality of feed channels (131) at different flow rates.

13. The method for extruding an extrudable material as claimed in claim 12, wherein the extrudable material is forced through the plurality of feed channels (131) at different flow rates by modifying the plurality of feed channels (131) to have different size, shape or cross section.

14. The method for extruding an extrudable material as claimed in claim 9, the method further comprising:
attaching at least one removably attachable passage forming member (160) to the barrier member.

## Patentansprüche

1. Formwerkzeug (100) zum Extrudieren eines extrudierbaren Materials zum Ausbilden eines extrudierten Elementes, wobei das Formwerkzeug Folgendes umfasst:
eine Einlasskammer (110) zum Aufnehmen eines Ausgangsstoffes in der Form eines Knüppels;
eine Extrudat ausbildende Kammer (150);
ein Schrankenelement, das zwischen der Einlasskammer (110) und der Extrudat ausbildenden Kammer (150) angeordnet ist, wobei das Schrankenelement mehrere Zufuhrkanäle (131) umfasst, die sich durch das Schrankenelement zum Ausbilden einer Fülllochplatte (130) erstrecken;
ein Durchlauf ausbildendes Element (160), das sich von dem Schrankenelement in der Extrusionsrichtung in die Extrudat ausbildende Kammer (150) erstreckt, wobei die Zufuhrkanäle (131) bezogen auf das Durchlauf ausbildende Element (160) angeordnet sind, um zu ermöglichen, dass das extrudierbare Material um das Durchlauf ausbildende Element (160) herum fließt, um einen entsprechenden Durchlauf in dem extrudierten Element auszubilden.

2. Formwerkzeug (100) zum Extrudieren eines extrudierbaren Materials zum Ausbilden eines extrudierten Elementes nach Anspruch 1, wobei das Formwerkzeug (100) mehrere Durchlauf ausbildende Elemente (160) umfasst, die sich von dem Schrankenelement im Wesentlichen in der Extrusionsrichtung (200, 300) erstrecken, und wobei die Zufuhrkanäle (131) bezogen auf die mehreren Durchlauf ausbildenden Elemente (160) angeordnet sind, um zu ermöglichen, dass das extrudierbare Material im Wesentlichen um die Durchlauf ausbildenden Elemente (160) fließt, um entsprechende Durchläufe in dem extrudierten Element auszubilden.

3. Formwerkzeug (100) zum Extrudieren eines extrudierbaren Materials zum Ausbilden eines extrudierten Elementes nach Anspruch 2, wobei wenigstens eines der mehreren Durchlauf ausbildenden Elemente (160) entfernbare Befestigungsmittel umfasst, um das wenigstens eine Durchlauf ausbildende Element an dem Schrankenmittel entfernbar zu befestigen.

4. Formwerkzeug (100) zum Extrudieren eines extrudierbaren Materials zum Ausbilden eines extrudierten Elementes nach Anspruch 2 oder 3, wobei die Durchlauf ausbildenden Elemente (160) in der Größe variieren, um entsprechende Durchläufe in dem extrudierten Element der variierenden Größe auszubilden.

5. Formwerkzeug (100) zum Extrudieren eines extrudierbaren Materials zum Ausbilden eines extrudierten Elementes nach einem der vorhergehenden Ansprüche, wobei die Zufuhrkanäle (131) in variierender Größe vorliegen, um die Extrusionsmenge des extrudierten Materials zu variieren.

6. Formwerkzeug (100) zum Extrudieren eines extrudierbaren Materials zum Ausbilden eines extrudierten Elementes nach Anspruch 2, wobei die Zufuhrkanäle (131) und die Durchlauf ausbildenden Elemente (160) in einem gleichmäßigen Gitter angeordnet sind.

7. Formwerkzeug (100) zum Extrudieren eines extrudierbaren Materials zum Ausbilden eines extrudierten Elementes nach einem der Ansprüche 1 bis 6, wobei die Fülllochplatte (130) von dem Formwerkzeug entfernbar ist.

8. Formwerkzeug (100) nach einem der Ansprüche 1 bis 7, wobei das extrudierte Element ein mikrostrukturiertes Faserformteil ist.

9. Verfahren zum Extrudieren eines extrudierbaren Materials zum Ausbilden eines extrudierten Elementes, wobei das Verfahren die folgenden Schritte umfasst:
Erhitzen eines Knüppels von Material in einer Einlasskammer (110) auf eine vorgegebene Temperatur, um ein extrudierbares Material auszubilden;
Zwingen des extrudierbaren Materials von der Einlasskammer (110) durch mehrere Zufuhrkanäle (131), die sich durch ein Schrankenelement in eine Extrudat ausbildende Kammer (150) erstrecken, wobei das Schrankenelement zwischen der Einlasskammer (110) und der Extrudat ausbildenden Kammer (150) angeordnet ist, um eine Fülllochplatte (130) auszubilden, und wobei die Zufuhrkanäle (131) um ein Durchlauf ausbildendes Element (160) angeordnet sind, das sich von dem Schrankenelement in der Extrusionsrichtung (200, 300) in die Extrudat ausbildende Kammer erstreckt; und
Ausbilden eines Durchlaufs in dem extrudierten Element durch Ermöglichen, dass das extrudierbare Material um das Durchlauf ausbildende Element fließt.

10. Verfahren zum Extrudieren eines extrudierbaren Materials nach Anspruch 9, wobei das Schrankenelement mehrere Durchlauf ausbildende Elemente (166) umfasst, die sich im Wesentlichen in der Extrusionsrichtung (200, 300) erstrecken, und wobei das extrudierbare Material durch die Zufuhrkanäle (131) gezwungen wird, um die mehreren Durchlauf ausbildenden Elemente (160) zu fließen und Durchläufe in dem extrudierten Element auszubilden, die den mehreren Durchlauf ausbildenden Elementen (160) entsprechen.

11. Verfahren zum Extrudieren eines extrudierbaren Materials nach Anspruch 10, wobei die Durchläufe in dem extrudierten Element mit verschiedenen Größen durch Modifizieren entsprechender Durchlauf ausbildender Elemente, um eine(n) verschiedene(n) Größe, Form oder Querschnitt aufzuweisen, ausgebildet sind.

12. Verfahren zum Extrudieren eines extrudierbaren Materials nach einem der Ansprüche 9 bis 11, wobei das extrudierbare Material mit verschiedenen Fließgeschwindigkeiten durch die mehreren Zufuhrkanäle (131) gezwungen wird.

13. Verfahren zum Extrudieren eines extrudierbaren Materials nach Anspruch 12, wobei das extrudierbare Material mit verschiedenen Fließgeschwindigkeiten durch die mehreren Zufuhrkanäle (131) gezwungen wird, indem die mehreren Zufuhrkanäle (131) modifiziert werden, um eine(n) verschiedene(n) Größe, Form oder Querschnitt aufzuweisen.

14. Verfahren zum Extrudieren eines extrudierbaren Materials nach Anspruch 9, wobei das Verfahren ferner Folgendes umfasst:
Befestigen wenigstens eines entfernbar befestigbaren Durchlauf ausbildenden Elementes (160) an das Schrankenelement.

## Revendications

1. Matrice (100) d'extrusion d'un matériau extrudable pour former un élément extrudé, la matrice comprenant :
une chambre d'admission (110) permettant de recevoir du matériau source sous la forme d'une billette ;
une chambre de formation d'extrudat (150) ;
un élément formant une barrière situé entre la chambre d'admission (110) et la chambre de formation d'extrudat (150), l'élément formant une barrière comprenant une pluralité de canaux d'alimentation (131) s'étendant à travers l'élément formant une barrière pour former une plaque à trous d'alimentation (130) ;
un élément de formation de passage (160) s'étendant depuis l'élément formant une barrière dans la direction de l'extrusion dans la chambre de formation d'extrudat (150), les canaux d'alimentation (131) étant disposés par rapport à l'élément de formation de passage (160) pour permettre au matériau extrudable de s'écouler autour de l'élément de formation de passage (160) pour former un passage correspondant dans l'élément extrudé.

2. Matrice (100) d'extrusion d'un matériau extrudable pour former un élément extrudé selon la revendication 1, la matrice (100) comprenant une pluralité d'éléments de formation de passage (160) s'étendant depuis l'élément formant une barrière sensiblement dans la direction d'extrusion (200, 300), et les canaux d'alimentation (131) étant disposés par rapport à la pluralité d'éléments de formation de passage (160) pour permettre sensiblement l'écoulement du matériau extrudable autour des éléments de formation de passage (160) pour former des passages correspondants dans l'élément extrudé.

3. Matrice (100) d'extrusion d'un matériau extrudable pour former un élément extrudé selon la revendication 2, dans laquelle au moins un des éléments de formation de passage (160) comprend un moyen amovible de fixation permettant d'attacher de manière escamotable l'au moins un élément de formation de passage aux moyens formant une barrière.

4. Matrice (100) d'extrusion d'un matériau extrudable pour former un élément extrudé selon la revendication 2 ou 3, les éléments de formation de passage (160) variant en taille pour former des passages correspondants dans l'élément extrudé de taille variable.

5. Matrice (100) d'extrusion d'un matériau extrudable pour former un élément extrudé selon l'une quelconque des revendications précédentes, dans laquelle les canaux d'alimentation (131) ont une taille variable pour faire varier le degré d'extrusion dudit matériau extrudable.

6. Matrice (100) d'extrusion d'un matériau extrudable pour former un élément extrudé selon la revendication 2, dans laquelle les canaux d'alimentation (131) et les éléments de formation de passage (160) sont disposés dans un treillis régulier.

7. Matrice (100) d'extrusion d'un matériau extrudable pour former un élément extrudé selon l'une quelconque des revendications 1 à 6, dans laquelle la plaque à trous d'alimentation (130) est amovible de la matrice.

8. Matrice (100) d'extrusion d'un matériau extrudable pour former un élément extrudé selon l'une quelconque des revendications 1 à 7, dans laquelle l'élément extrudé est une préforme de fibres microstructurées.

9. Procédé d'extrusion d'un matériau extrudable pour former un élément extrudé, le procédé comprenant les étapes suivantes :
le chauffage d'une billette de matériau dans une chambre d'admission (110) jusqu'à une température prédéfinie pour former un matériau extrudable ;
le forçage de la matière extrudable de la chambre d'admission (110) à travers une pluralité de canaux d'alimentation (131) s'étendant à travers un élément formant une barrière dans une chambre de formation d'extrudat (150) situé entre la chambre d'admission (110) et la chambre de formation d'extrudat (150) pour former une plaque à trous d'alimentation (130), et les canaux d'alimentation (131) situés autour d'un élément de formation de passage (160) s'étendant à partir de l'élément formant une barrière dans la direction d'extrusion (200, 300) dans la chambre de formation d'extrudat ; et
la formation d'un passage dans l'élément extrudé par admission de l'écoulement de matériau extrudable autour de l'élément de formation de passage.

10. Procédé d'extrusion d'un matériau extrudable selon la revendication 9, dans lequel l'élément formant une barrière comprend une pluralité d'éléments de formation de passage (166) s'étendant sensiblement dans la direction d'extrusion (200, 300) et dans lequel le matériau extrudable est forcé à travers les canaux d'alimentation (131) pour s'écouler autour de la pluralité d'éléments de formation de passage (160) et pour former des passages dans l'élément extrudé, correspondant à la pluralité d'éléments de formation de passage (160).

11. Procédé d'extrusion d'un matériau extrudable selon la revendication 10, dans lequel les passages pratiqués dans l'élément extrudé sont formés en ayant différentes tailles par modification des l'éléments correspondants de formation de passage pour avoir différentes tailles, formes ou coupes transversales.

12. Procédé d'extrusion d'un matériau extrudable selon l'une quelconque des revendications 9 à 11, dans lequel le matériau extrudable est forcé à travers la pluralité de canaux d'alimentation (131) à différents débits.

13. Procédé d'extrusion d'un matériau extrudable selon la revendication 12, dans lequel le matériau extrudable est forcé à travers la pluralité de canaux d'alimentation (131) à différents débits par modification de la pluralité de canaux d'alimentation (131) pour avoir différentes tailles, formes ou coupes transversales.

14. Procédé d'extrusion d'un matériau extrudable selon la revendication 9, le procédé comprenant en outre :
la fixation d'au moins un élément de formation de passage (160) qu'on peut attacher de manière escamotable à l'élément formant une barrière.
